# EUROPEAN PATENT SPECIFICATION

(11) **EP 1 256 429 B1**
(45) Date of publication and mention of the grant of the patent: **21.12.2005**
(21) Application number: 02253165.1
(22) Date of filing: 07.05.2002
(51) Int. Cl.: B29B 9/04

(54) **Process for manufacturing granulated hydrophilic resin**
Verfahren zur Herstellung von granuliertem hydrophilen Harz
Procédé pour la fabrication de granulés de résine hydrophile

(30) Priority: 09.05.2001 JP 2001138828
(43) Date of publication of application: 13.11.2002
(73) Proprietor: DAI-ICHI KOGYO SEIYAKU CO., LTD., Kyoto-shi, Kyoto 600-8873 (JP)
(72) Inventor: Akao, Toshikazu, Nishikyo-ku, Kyoto-shi, 615-8117 Kyoto (JP)
(74) Representative: West, Alan Harry

(56) References cited:
- DD-A- 52 798
- DE-B- 1 222 891
- GB-A- 875 140
- US-A- 1 583 484
- US-A- 3 643 874
- US-A- 4 690 788
- US-A- 4 734 238

## Description

The present invention relates to a process for manufacturing a granulated hydrophilic resin. More specifically, the present invention relates to a process for manufacturing a granulated hydrophilic resin, which is suitable for use as a raw material for the molding fabrication such as extrusion molding.

Extrusion molding, in which an extruder is used, has been often carried out in the fabrication of thermoplastic resins that are used in the manufacture of molded articles, films, vessels and the like. In the extrusion molding, previously pelletized resins are used, and they are melted and fed into an extruder, in general.

When the resin used in the extrusion molding is selected from resins that are insoluble in water, for example, PP (polypropylene), PE (polyethylene), ABS (acrylonitrile-butadiene-styrene copolymer), PET (polyethylene terephthalate) and the like, methods have been adopted wherein: melted resins are extruded into a thread-like shape with an extruder, solidified by water cooling, and then pellets are obtained using a slide cutter or the like.

However, when hydrophilic resins, in particular an alkylene oxide polymer containing ethylene oxide is used, the above-described methods cannot be employed because such a resin has comparatively low melting point and have great rate of dissolution or of water absorption. Therefore, when hydrophilic resins have been used so far, the hydrophilic resins have been previously subjected to powderization in the steps for manufacturing, and thus resulting powder is fed into an extruder by the common practice. However, upon feeding of the resin powder into an extruder, constant quantity feeding of the resin may often be difficult due to the occurrence of the surging, thereby leading to the problems of impossibilities in obtaining the molded products intended.

The present invention was accomplished to solve the aforementioned problems. The object of the present invention is to provide processes for manufacturing granulated polyalkylene oxide resins, which can be employed in extrusion molding and the like.

Such is the case in United States patent no. 4,734,238, which discloses a process for producing a powder of a cationic polymer by spreading a layer of an aqucous solution of a vinyl monomer onto a movable carrier, carrying out polymerisation and cutting the polymer in a hot state by a shearing stress.

United States patent no. 4,690,788 describes a process for preparing pulverised water-soluble polymer gel particles obtained by subjecting an aqueous solution of a water-soluble vinyl monomer to polymerisation.

United States patent no. 3,643,874 describes a process for the preparation of intermediates of polyaddition resins, comprises, amongst others, the steps of proportioning and feeding the base compositions of a resin, in solid and/or liquid form, in a mixing and kneading machine. The problem associated with this step has been mentioned previously.

United States patent no. 1,583,484 relates to a process of forming flakes of heated plastics and gelatinous materials wherein the semi-solid gels are fed between one hot roller and a cold roller and solidifying the gel on the cold roller. The gel solidifies upon cooling on the cold roller and is then removed and shaped, if desired. This method is time consuming and inefficient where continuous production is required

Great British Patent no. 875,140 describes a process for fragmenting resinous material. The resinous material is provided in a liquid state to a moving, endless belt. The layer, which forms on the belt, is cooled so that it forms a semi-solid state. A number of intersecting grooves are impressed upon the layer so that when the resin is fully cooled, it may be broken along these intersecting lines, the resulting product being hard and brittle.

German Democratic Republic patent no. 52798 describes a process for short period transport of a mixed polyester mix to an endless belt which is cooled underneath to solidify the melt. The strip of the polyester melt is then exposed to air or inert gas directed additionally from above and/or possibly from the side.

German Bundesrepublik patent no. 1222891 describes a process for the manufacture of material which is easily crushed. The crushable material is received on a transport strip as a melt, and whilst the plastic is still in a soft form, grooves are made in the plastic by the pressure of gas blown from more than one jet arranged close by. The grooves provide a line of weakness along which the material can be crushed easily.

As a consequence of elaborate investigations to achieve the granulation of polyalkylencoxide resins having a low melting point in view of the aforementioned problems, the present inventors found that the granulation of these resins is enabled at a practical rate of production by: melting the polyalkyleneoxide resin to a melt viscosity of 200 - 3000 Pa.s.; extruding the polyalkyleneoxide resin to a plate-like shape having a predetermined thickness; cooling and solidifying the extruded resin through contact with a metal plate; and granulating the polyalkyleneoxide resin of the plate-like shape by cutting. Accordingly, the present invention could be accomplished.

The process for the manufacture according to the present invention is suitably applied when a polyalkyleneoxide resin containing ethylene oxide has a pour point of 50 to 200 C is used. When the polyalkyleneoxide resin has a pour point of less than 50 C, cooling efficiency may be significantly deteriorated. To the contrary, when the polyalkyleneoxide resin has a pour point of greater than 200 C, solidifying with cooling may be facilitated to result in the loss of the significance to apply the present invention.

When an alkylene oxide polymer containing an ethylene oxide is used, the molecular weight thereof is not particularly limited, however, the polymer may preferably have a molecular weight in the range of from 50,000 to 300,000. When the molecular weight of the polymer is less than 50,000, the characteristics as the resin may not be exhibited. Such a low molecular weight of a polymer is not preferable because cracks upon flexion are apt to occur in some cases where the resin is formed into a sheet, for example. Additionally, when the molecular weight of the polymer is greater than 300,000, the melt viscosity may be elevated, and thus increase in the extrusion amount may become difficult in some cases during the extrusion step where the melted resin is extruded.

In the present invention, organic or inorganic fine particles may also be added to the polyalkyleneoxide resin as needed. The fine particles may be added for the purpose of preventing blocking in compliance with the intended purpose and with the type of usage of the resin. The organic particles that can be used include for example, polystyrene, polyethylene, polypropylene and the like. Examples of the inorganic particles include silica, alumina, zirconia, compound oxides and the like. However, these particles are not particularly limited to the above examples. Furthermore, multiple kinds of fine particles may also be added. In the present invention, antioxidants, antiseptic agents, light resistance improvers and the like may be added in compliance with the intended use of the resin

The process for manufacturing a granulated polyalkyleneoxide resin according to the present invention comprises a melting step and an extrusion step and the melted resin is extruded using an extruder or the like. In order to sufficiently cool the resin in the subsequent cooling step, the resin is extruded to result in a plate-like shape having a predetermined thickness. Favorable procedure for extruding the melted hydrophilic resin into a plate-like shape having a predetermined thickness may involve an extrusion procedure in which the melted resin is subjected to the concurrently conducted extraction and extrusion using a reaction vessel equipped with an extruder or a polymer pump at the bottom thereof after the synthetic reaction of the resin was completed. In addition, the procedure for the extrusion of a resin to yield a predetermined thickness may involve a T-die mounted onto a tip of a pipe arrangement.

In the extrusion step, melt viscosity of the melted resin is not particularly limited as long as a predetermined thickness can be provided, however, the melt viscosity of 200 to 3,000 Pa·s is preferred. When the melt viscosity is less than 200 Pa·s, the thickness of the melted resin that is discharged from T-die or the like is liable to vary. To the contrary, when the viscosity is greater than 3,000 Pa·s, discharging of the resin with a predetermined thickness may be difficult. Thickness of the resin in a plate-like shape extruded in this step in general, may be suitably from 0.5 to 4 mm, taking into account of the cooling efficiency in the next cooling step, and of the granular size finally yielded.

In the next cooling step, the melted resin that was extruded from the T-die or the like is cured upon cooling through the contact with a metal plate. The cooling procedure may involve blowing cool air onto the melted resin, however, it is suitable to adopt the procedure in which a drum cooler, W-steel band belt or the like is used to cool and cure the resin by spraying a cooling medium from the rear face of the metal surface to the side contacted with the resin. In any of the procedures, the melted resin that was discharged onto the cooled metal plate is cured with cooling while being fed. Specifically, when a W-steel band belt is used, conditions that allow optional amount of the production can be readily achieved by the selection of the cooling belt, the temperature of the cooling medium and the sort of the cooling medium, as well as the selection of the width of the T-die and the width of the W-steel. In such a manner, the process for the manufacture according to the present invention can be suitably practiced. The cooling temperature of the resin is desirably lower than the melting point of the resin to be granulated by 20ºC or greater.

After being cured with cooling, the resin is then subjected to the granulation by the cutting, grinding and the like in the granulating step. Although sheet pelletizing machines or crushing machines can be used for the granulating step, a sheet pelletizing machine is suitably used in respect to feasibility of the uniform particle size of the resulting granules. Although there are sheet pelletizing machines having wide variety of structures, those preferred for cutting the resin having a low pour point may be of the structure in which a cutter part, in particular a slitter role part, can be cooled with a cooling medium. In order to use a sheet pelletizing machine in an efficient manner, it is preferable to feed the solidified resin having a plate-like shape with a width of 80% of the width of the slitter role. Therefore, this cutting step is also included in the granulating step when the step for the cutting is provided in the present invention, in which the resin sheet that was cored with cooling is cut while being divided using a slitter prior to the cutting with a sheet palletizing machine.

Because a polyalkyleneoxide resin is dealt with in the process for the manufacture according to the present invention, to carry out the entire steps for the manufacture in a dry atmosphere is effective in view of preventing the resin from absorbing the moisture. Through carrying out the granulating step in a dry atmosphere, condensation of the moisture in the atmospheric air to the cooling part of the slitter role or the like of the sheet pelletizing machine can be prevented. Thus, mutual fusion of the granules upon cutting can be prevented. The temperature of the dry atmosphere is determined on the basis of the moisture absorption property and the amount of permissible moisture of the resin, however, it is preferably below the dew point by 10ºC or greater.

In the present invention, selection step may be further provided for giving uniform granules of the resin that were obtained in the granulating step. Common sieves can be used in the selection step, however, e.g., a shaking sieve with which selection is executed by subjecting the granular resin to fluidization on the inclined-face of the sieve while imparting the vibration, or a trommel sieve with which selection is executed while rotating the granules on the inclined-face of the sieve having a trumpet shape in itself and of the horizontal type, or the like may be suitably used, taking into account of the productivity in the steps for the manufacture. The granular resin obtained in the granulating step is preferably selected through directly introducing into such a sieve.

In accordance with the process for manufacturing the granulated polyalkyleneoxide resin of the present invention, the resin is extruded to result in a predetermined shape such as plate-like shape or the like in a molten state, and thereafter cured with cooling through the contact with a metal plate followed by the granulation. Therefore, because the process for the manufacture according to the present invention excludes a step of contact of the resin with cooling water, granulated polyalkyleneoxide resin can be obtained which is suitable for use as a raw material for the molding fabrication such as extrusion molding and the like.

The following Example illustrates the invention.

### EXAMPLE

The powder of a ternary polymer of polyalkyleneoxide (molecular weight: 100.000, melt viscosity: 800 Pa·s/80ºC. pour point: 63ºC) consisting of ethylene oxide, methylglycidyl ether and allylglycidyl ether was prepared. The melt of this ternary polymer of polyalkyleneoxide was discharged into a sheet shape having the width of 20 cm and the thickness of 15 mm using an extruder equipped with a T-die at a tip thereof. This procedure was conducted under a condition of the extruder with the inner temperature of the cylinder is 70ºC, and the temperature of the T-die of 80ºC. In addition, the temperature of the melt that was discharged was 85ºC.

Next, the discharged material was dropped on a small-scale drum cooler (diameter: 30 cm, length: 30 cm) at 15 cm/min. Cooling water of 15ºC was circulated in the drum cooler. The surface temperature of the ternary polymer of polyalkyleneoxide that was cured with the drum cooler was 25ºC. Thus resulting sheet was cut using a sheet palletizing machine into the width of 4 mm and the length of 4 mm similarly to the procedure in Example 1. Thereafter, particle size classification was carried out with a rotating type sieve machine. The percent defective of the granules having defective sizes excluded by the sieve machine was 0.3%. In the measurement of the particle diameter as well, variation of the width, length, and thickness was within 15%.

## Claims

1. A process for the manufacture of a granulated polyalkyleneoxide resin containing ethylene oxide comprising:
melting the polyalkyleneoxide resin to a melt viscosity of 200 - 3000 Pa.s.;
extruding the polyalkyleneoxide resin to a plate-like shape having a predetermined thickness;
cooling and solidifying the extruded resin through contact with a metal plate; and
granulating the polyalkyleneoxide resin of the plate-like shape by cutting.

2. A process according to claim 1, comprising:
cooling and solidifying the extruded resin by contact with a metal plate on one or both sides of the plate-like shape.

3. A process according to claim 1 or claim 2, wherein the polyalkyleneoxide resin containing ethylene oxide has a pour point of 50 - 200°C.

4. A process according to any one of claims 1 to 3, wherein the polyalkyleneoxide resin has a weight-average molecular weight of 50,000 - 300,000.

5. A process according to any one of claims 1 to 4, wherein the resin contains organic or inorganic fine particles for the purpose of preventing blocking.

6. A process according to claim 5, wherein the organic particles are polymer particles selected from those of polystyrene, polyethylene and polypropylene.

7. A process according to claim 5, wherein the inorganic particles are selected from those of silica, alumina and zirconia.

8. A process according to any one of claims 1 to 7, wherein cooling is carried out by contacting a cooling medium with the rear face of the metal plate(s).

9. A process according to any one of claims 1 to 8, wherein granulation is carried out using a sheet pelletizing machine.

10. A process according to any one of claims 1 to 9, wherein granulation is carried out in a dry atmosphere.

11. A process according to any one of claims 1 to 10, further comprising selecting particles of the granulated resin having a predetermined size.

## Patentansprüche

1. Verfahren zur Herstellung eines granulierten, Ethylenoxid enthaltenden Polyalkylenoxidharzes, aufweisend:
Schmelzen des Polyalkylenoxidharzes bis zu einer Schmelzeviskosität von 200 bis 3.000 Pa.s,
Extrudieren des Polyalkylenoxidharze s in eine plattenförmige Gestalt mit einer vorbestimmten Dicke,
Abkühlen und Verfestigen des extrudierten Harzes durch Berührung mit einer Metallplatte und Granulieren des Polyalkylenoxidharzes mit der plattenförmigen Gestalt durch Schneiden.

2. Verfahren gemäß Anspruch 1, aufweisend:
Abkühlen und Verfestigen des extrudierten Harzes mittels Berührung mit einer Metallplatte auf einer oder auf beiden Seiten der plattenförmigen Gestalt.

3. Verfahren nach Anspruch 1 oder 2, wobei das Ethylenoxid enthaltende Polyalkylenoxidharz einen Fließpunkt von 50 bis 200 °C aufweist.

4. Verfahren nach einem der Ansprüche 1 bis 3, wobei das Polyalkylenoxidharz ein gewichtsmittleres Molekulargewicht von 50.000 bis 300.000 aufweist.

5. Verfahren nach einem der Ansprüche 1 bis 4, wobei das Harz zum Zwecke des Verhinderns von Blocken organische oder anorganische Feinteilchen enthält.

6. Verfahren nach Anspruch 5, wobei die organischen Teilchen Polymerteilchen sind, die aus denjenigen aus Polystyrol, Polyethylen und Polyp ropylen ausgewählt sind.

7. Verfahren nach Anspruch 5, wobei die anorganischen Teilchen aus denjenigen aus Siliciumdioxid, Aluminiumoxid und Zirkoniumdioxid ausgewählt sind.

8. Verfahren nach einem der Ansprüche 1 bis 7, wobei das Abkühlen durch Inberüh rungbringen eines Kühlmittels mit der Rückseite der Metallplatte(n) durchgeführt wird.

9. Verfahren nach einem der Ansprüche 1 bis 8, wobei die Granulierung unter Benutzung einer FlächengebildePelletiermaschine durchgeführt wird.

10. Verfahren nach einem der Ansprüche 1 bis 9, wobei die Granulierung in einer trockenen Atmosphäre durchgeführt wird.

11. Verfahren nach einem der Ansprüche 1 bis 10, ferner aufweisend das Auswählen von Teilchen des granulierten Harzes mit einer vorbestimmten Größe.

## Revendications

1. Procédé de fabrication d'une résine de poly(oxyde d'alkylène) granulée, contenant de l'oxyde d'éthylène, qui comprend les opérations consistant à :
faire fondre la résine de poly(oxyde d'alkylène) pour obtenir un produit fondu ayant une viscosité de 200 à 3000 Pa.s,
extruder la résine de poly(oxyde d'alkylène) pour lui donner la forme d'une plaque ayant une épaisseur fixée à l'avance,
refroidir et solidifier la résine extrudée par contact avec une plaque métallique, et
granuler la résine de poly(oxyde d'alkylène) du produit en forme de plaque par découpage.

2. Procédé selon la revendication 1, dans lequel on refroidit et solidifie la résine extrudée en mettant un côté ou les deux côtés du produit en forme de plaque en contact avec une plaque métallique.

3. Procédé selon la revendication 1 ou 2, dans lequel la résine de poly(oxyde d'alkylène) contenant de l'oxyde d'éthylène est une résine ayant un point d'écoulement de 50 à 200 °C.

4. Procédé selon l'une quelconque des revendications 1 à 3, dans lequel la résine de poly(oxyde d'alkylène) est une résine ayant une masse moléculaire moyenne en poids de 50 000 à 300 000.

5. Procédé selon l'une quelconque des revendications 1 à 4, dans lequel la résine est une résine contenant de fines particules organiques ou minérales, afin d'empêcher le blocage.

6. Procédé selon la revendication 5, dans lequel les particules organiques sont des particules de polymère, prises parmi les particules de polystyrène, les particules de polyéthylène et les particules de polypropylène.

7. Procédé selon la revendication 5, dans lequel les particules minérales sont des particules de silice, d'alumine ou de zircone.

8. Procédé selon l'une quelconque des revendications 1 à 7, dans lequel on effectue le refroidissement en mettant un agent de refroidissement en contact avec la face arrière de la plaque métallique ou des plaques métalliques.

9. Procédé selon l'une quelconque des revendications 1 à 8, dans lequel on effectue la granulation en utilisant une machine à pastillage.

10. Procédé selon l'une quelconque des revendications 1 à 9, dans lequel on effectue la granulation dans une atmosphère sèche.

11. Procédé selon l'une quelconque des revendications 1 à 10, qui comprend en outre le tri des particules de la résine granulée, ayant une taille fixée à l'avance.
